# EUROPÄISCHE PATENTSCHRIFT

(11) **EP 3 919 805 B1**
(45) Veröffentlichungstag und Bekanntmachung des Hinweises auf die Patenterteilung: **29.11.2023**
(21) Anmeldenummer: 20178485.7
(22) Anmeldetag: 05.06.2020
(51) Int. Cl.: F17C 13/04, F17C 1/06

(54) **HOCHDRUCKBEHÄLTER**
HIGH PRESSURE VESSEL
RÉSERVOIR HAUTE PRESSION

(43) Veröffentlichungstag der Anmeldung: 08.12.2021
(73) Patentinhaber: Magna Energy Storage Systems GesmbH, 8261 Sinabelkirchen (AT)
(72) Erfinder: PUNTIGAM, David, 8522 Gross St.Florian (AT); PREITLER, Andreas, 8101 Gratkorn (AT); PUCHLEITNER, Rainer, 8052 Graz (AT)
(74) Vertreter: Zangger, Bernd

(56) Entgegenhaltungen:
- JP-A- H10 332 083
- JP-A- H10 332 085
- US-A1- 2004 173 618
- US-A1- 2008 251 520
- US-A1- 2017 284 601
- US-A1- 2019 170 300

## Beschreibung

### Gebiet der Erfindung

Die vorliegende Erfindung betrifft einen Hochdruckbehälter, insbesondere zur Speicherung eines Kraftstoffs für ein Kraftfahrzeug.

### Stand der Technik

Es ist bekannt das Hochdruckbehälter, beispielsweise zum Speichern von Wasserstoff als Kraftstoff für Kraftfahrzeuge, aus einer innenliegenden Schicht, dem sogenannten "Liner", und einer Wicklung von Fasermaterial um den Liner herum aufgebaut werden können.

Zur Herstellung eines Behälters ist es bekannt, die Technologien des Blasformens und Thermoformens einzusetzen. Die Herstellung beruht dann auf der Umformung von schlauch- oder plattenförmigen Halbzeugen. Diese werden durch Unterdruck und/oder Überdruck in ihre finale Form gebracht. Beispielsweise können zwei Halbschalen erzeugt werden, die aneinander gefügt werden, um einen Behälter zu bilden.

Für den Anwendungsfall von gasdichten Linern für Typ IV Behälter, die zur Druckspeicherung von Gasen eingesetzt werden, gibt es zwei gängige Produktionsmethoden. Zum einen das Blasformen von ganzen Linern, zum anderen die Methode der Herstellung von Segmenten des Behälters im Spritzguss und Extrusionsverfahren sowie eine nachgeschaltete Verbindung dieser Komponenten durch ein Fügeverfahren.

Die hierbei zum Einsatz kommenden Werkstoffe sind zumeist auf Basis von HDPE (High Density Polyethylen) oder Polyamiden.

Ein wichtiges Unterscheidungsmerkmal für Linerwerkstoffe sind die mechanischen Tieftemperatureigenschaften sowie die Emissionseigenschaften. Monolayermaterialien wie Polyamid verfügen über eine gute Sperreigenschaft für Gase, jedoch nicht über optimale Tieftemperatureigenschaften. HDPE hingegen verfügt über keine geeignete Sperrwirkung, jedoch über sehr gute Tieftemperatureigenschaften.

Speziell für Anwendungen im Bereich Wasserstoff kommt aus diesem Grund aktuell hauptsächlich Polyamid zum Einsatz. Jedoch sind dadurch vor allem für Blasformtechnologie Grenzen im Hinblick auf Bauteilgröße gesetzt. Die verfügbaren geeigneten Typen sind auf Grund ihrer aufwändigen Additivierung überdies teuer und problematisch beim Einsatz bei tiefen Temperaturen.

Hochdruckbehälter für Gase unterliegen im Zuge ihres Betriebs (Befüllen, Speichern und Entleeren) großen Temperaturschwankungen. Dies stellt hohe Anforderungen an die Materialien und im Speziellen an den Liner dar.

In Verbindung mit der Leichtbauweise und der Verwendung von Verbundwerkstoffen stellt sich in diesem Zusammenhang die Herausforderung die unterschiedlichen Materialien an der Fügestelle gasdicht miteinander zu verbinden. Ein Hochdruckbehälter ist aus JP H10 332085 A bekannt.

### Zusammenfassung der Erfindung

Es ist eine Aufgabe der Erfindung, einen Hochdruckbehältern in dieser Hinsicht zu verbessern und insbesondere einen Hochdruckbehälter anzugeben, der auch in einem Übergangsbereich zu einem Bossteil die Anforderungen an Dichtheit und Permeation für einen Hochdruckbehälter erfüllt und dabei einfach und kostengünstig herstellbar ist.

Die Lösung der Aufgabe erfolgt durch einen Hochdruckbehälter umfassend einen Zylinder als Mittelteil, wobei der Zylinder aus einem Kunststoff besteht, wobei der Hochdruckbehälter ferner zumindest eine Halbschale an einem axialen Ende des Zylinders umfasst, wobei die Halbschale aus dem Kunststoff besteht, wobei die Halbschale ferner ein im wesentlichen rotationssymmetrisches Einlegeteil, nämlich ein Bossteil, umfasst, wobei das Einlegeteil ein Fußteil an dem, dem Behälterinneren zugewandten Ende des Einlegeteils aufweist, wobei das Fußteil des Einlegeteils in den Kunststoff der Halbschale eingebettet ist, wobei das Fußteil im Wesentlichen einen Hohlkegel oder Hohlzylinder bildet, wobei eine Hülse in den Innenumfang des Fußteils zumindest in einem Verpressungsabschnitt der Hülse eingepresst ist, wobei der Kunststoff der Halbschale zwischen der Hülse und dem Innenumfang des Fußteils angeordnet ist, sodass im Verpressungsabschnitt eine dünne Kunststoffschicht des Kunststoffs der Halbschale zwischen Hülse und Innenumfang des Fußteils verpresst ist.

Erfindungsgemäß wird als Material für den Liner, sowohl in dem durch den Zylinder gebildeten Mittelteil, als auch in zumindest einem, bevorzugt in beiden axialen Endbereichen des Behälters, ein Kunststoff, insbesondere ein Kunststoff-Mehrschichtverbund verwendet. Kunststoffe, insbesondere auch Mehrschicht-Kunststoffe die vorzugsweise auch eine Barriereschicht umfassen, können auf einfache Weise mittels Blasformen oder Tiefziehen bzw. Vakuumformen zu einer Halbschale geformt werden. Der Zylinder im Mittelteil kann beispielsweise ebenfalls blasgeformt oder beispielsweise extrudiert sein. Erfindungsgemäß wird ein Bossteil verwendet, das einen Fußteil aufweist, wobei das Fußteil im Wesentlichen einen Hohlkegel oder Hohlzylinder bildet. Das Fußteil des Einlegeteils ist in den Kunststoff der Halbschale eingebettet. Der Kunststoff umgibt also das Bossteil zumindest von zwei Seiten. Das Fußteil weist bevorzugt einen größeren Durchmesser auf, als ein benachbarter Mittelteil des Bossteils. Das Fußteil bildet somit bevorzugt eine Hinterschneidung, in Bezug auf einen von der Seite des Fußteils bzw. des Behältermittelpunkts her eingebrachten Kunststoff des Liners. Der Kunststoff ist bevorzugt axial an beiden Seiten des Fußteils, also an beiden Seiten der Hinterschneidung, angeordnet, also an einer dem Behältermittelpunkt zugewandten Oberfläche des Bossteils und an einer vom Behältermittelpunkt abgewandten Oberfläche des Bossteils.

Die Herstellung der Halbschale mit eingebettetem Bossteil und des gesamten Hochdruckbehälters ist dennoch auf kostengünstige Weise möglich, da, wie später näher beschrieben wird, das Einbringen des Kunststoffes trotz Hinterschneidung am Fußteil des Bossteils mittels Blasformen oder Vakuumtiefziehen möglich ist.

Das Fußteil ist im Inneren, im Bereich seiner Längsmittelachse, hohl und bildet daher im Wesentlichen einen Hohlkegel oder einen Hohlzylinder.

In den Innenumfang des Fußteils ist erfindungsgemäß eine Hülse eingepresst, zumindest entlang eines sich in axialer Richtung der Hülse erstreckenden Verpressungsabschnitts der Hülse.

Der Kunststoff der Halbschale ist auch in Zwischenräumen zwischen der Hülse und dem Innenumfang des Fußteils angeordnet.

Eine dünne Schicht des Kunststoffs der Halbschale ist daher im Verpressungsabschnitt zwischen der Hülse und dem Innenumfang des Fußteils angeordnet. Im Verpressungsabschnitt ist somit eine dünne Kunststoffschicht, also ein Kunststofffilm, des Kunststoffs der Halbschale zwischen Hülse und Innenumfang des Fußteils verpresst.

Durch die Ausbildung der dünnen Kunststoffschicht beim Verpressen der Hülse in das Bossteil besteht eine zuverlässige Dichtung zwischen Hülse und Bossteil. Durch die geringe Dicke des Kunststofffilms ist die Wärmeausdehnung im Betrieb, sowie der Schrumpf während des Herstellungsprozesses, in diesem Bereich vernachlässigbar klein und eine gute Abdichtung gewährleistet.

Die Hülse besteht bevorzugt aus Metall.

Die dünne Kunststoffschicht des Kunststoffs der Halbschale, die zwischen Hülse und Innenumfang des Fußteils verpresst ist, erstreckt sich bevorzugt über den gesamten Verpressungsabschnitt. Besonders bevorzugt weist die Hülse aber auch einen axialen Abschnitt außerhalb des Verpressungsabschnitts auf, in welchem vorteilhafterweise eine dickere Schicht des Kunststoffs der Halbschale angeordnet ist.

Bevorzugt füllt der Kunststoff der Halbschale den gesamten Raum zwischen der Hülse und dem Innenumfang des Fußteils aus.

Der Kunststoff des Liners, also des Mittelteils und der Halbschale, bevorzugt beider Halbschalen, ist vorzugsweise ein Mehrschichtverbund-Kunststoff, der eine Barriereschicht umfasst.

Bevorzugt läuft eine mit dem Kunststoff der Halbschale gefüllte erste Nut oder Vertiefung an dem Innenumfang des Fußteils, auf Höhe der Hülse, zumindest abschnittsweise, also beispielsweise in einzelnen Sektoren oder um den gesamten Innenumfang des Hohlzylinders oder Hohlkegels, um. Bevorzugt befindet sich die erste Nut axial außerhalb des Verpressungsabschnitts. Insbesondere kann die erste Nut axial anschließend an den Verpressungsabschnitt ausgebildet sein.

Diese Nut oder Vertiefung ist mit dem Kunststoff der Halbschale gefüllt. Eine "Vertiefung" kann ähnlich einer Nut ausgebildet sein, und weist jedenfalls zumindest eine Kante auf, die als Hinterschneidung für den dahinterliegenden Kunststoff wirkt, so dass der Kunststoff formschlüssig hinter der Kante im Bereich des Innenumfangs gehalten ist.

Vorzugsweise wird der Kunststoff der Halbschale durch die Hülse gegen den Innenumfang des Fußteils und in die erste Nut gedrückt. Der Kunststoff bleibt somit zuverlässig in der ersten Nut und die Dichtwirkung wird weiter erhöht.

Das Fußteil weist bevorzugt zumindest eine zweite Nut auf, die mit dem Kunststoff der Halbschale gefüllt ist, wobei die zweite Nut in der Nähe des Innenumfangs des Fußteils an dem, dem Behälterinneren zugewandten, Boden des Fußteils zumindest abschnittsweise umläuft. Diese Nut dient in erster Linie ebenfalls der Erhöhung der Dichtheit zwischen Liner und Bossteil.

Vorzugsweise weist das Fußteil zumindest eine dritte Nut auf, die mit dem Kunststoff der Halbschale gefüllt ist, wobei die dritte Nut an der, der Außenseite des Behälters zugewandten, Deckfläche des Fußteils zumindest abschnittsweise umläuft. Zusätzlich zur Erhöhung der Dichtheit verhindert diese dritte Nut auch ein Ablösen des Kunststoffs vom Bossteil an der Deckfläche des Fußteils.

Bevorzugt weist das Fußteil zumindest eine vierte Nut auf, die mit dem Kunststoff der Halbschale gefüllt ist, wobei die vierte Nut in der Nähe des Außenumfangs des Fußteils an dem, dem Behälterinneren zugewandten, Boden des Fußteils zumindest abschnittsweise umläuft. Auch diese Nut verhindert ein Ablösen des Kunststoffs vom Bossteil.

Die erste Nut und/oder die zweite Nut und/oder die dritte Nut und/oder die vierte Nut kann eine Trapezform aufweisen, die sich zum Boden der Nut hin vergrößert, so dass der Formschluss des Kunststoffs in der Nut verbessert wird.

In jeder der Nuten, bevorzugt vor allem in der ersten und/oder zweiten Nut, kann am Boden der Nut ein zusätzliches Dichtelement angeordnet sein.

Der Kunststoff des Zylinders geht bevorzugt in den Kunststoff der Halbschale über. Eine Barriereschicht verläuft im Kunststoff bevorzugt möglichst kontinuierlich am Übergang zwischen Zylinder und Halbschale.

Der Kunststoff ist bevorzugt ein Mehrschichtverbund-Kunststoff. Der Mehrschichtverbund-Kunststoff der Halbschale, und bevorzugt auch der Mehrschichtverbund-Kunststoff des Zylinders, umfasst vorzugsweise zumindest eine Schicht aus HDPE und eine Barriereschicht, insbesondere EVOH, bevorzugt auch ein Regranulat, also eine Regrindschicht, und/oder eine zweite HDPE Schicht und/oder zumindest eine Haftvermittlerschicht.

Vorzugsweise umfasst der Hochdruckbehälter zwei Halbschalen an den axialen Enden des Zylinders, wobei bevorzugt beide Halbschalen so ausgebildet sind, wie zuvor für die erste Halbschale beschrieben.

Der Zylinder und die beiden Halbschalen sind bevorzugt mit einem Fasermaterial umwickelt, bevorzugt mit einem Verbundwerkstoff umfassend Kohlefasern und/oder Glasfasern und/oder Epoxidharz.

Der Hochdruckbehälter umfasst bevorzugt auch ein Ventil, insbesondere ein Ventil zur Entnahme des Mediums im Hochdruckbehälter, das in den Bossteil aufgenommen ist, wobei ein bevorzugt zylinderförmiger Schaftabschnitt des Ventils in der Hülse aufgenommen ist. Der Schaftabschnitt des Ventils steckt somit bevorzugt abschnittsweise direkt im Bossteil und abschnittsweise in der Hülse, innerhalb des Bossteils.

Gemäß einer Ausführungsform kann in einem derartigen Hochdruckbehälter ein Dichtelement, bevorzugt eine Ringdichtung, zwischen dem Schaftabschnitt des Ventils und der Hülse angeordnet sein, um zwischen Ventil und Hülse abzudichten. Alternativ oder zusätzlich kann ein Dichtelement, bevorzugt eine Ringdichtung, unmittelbar zwischen dem Schaftabschnitt des Ventils und dem Bossteil abdichten, insbesondere näher am axialen Ende des Behälters als die Hülse.

Es kann somit eine Dichtung in einem tiefen Bereich des Ventils verwendet werden, nämlich erst im Fußbereich des Bossteils und/oder auch eine höherliegende Dichtung.

Vorzugsweise reicht die Hülse zumindest bis zum axialen Ende des Bossteils, das dem Behältermittelpunkt zugewandt ist, besonders bevorzugt reicht die Hülse über dieses Ende des Bossteils hinaus.

Die Herstellung eines erfindungsgemäßen Hochdruckbehälters kann bevorzugt mit einem Werkzeug erfolgen, mit einer ersten Werkzeughälfte die eine Matrize bildet, und die Schritte umfassen:
- eine vorgeheizte erste Kunststoffplatte wird auf die erste Werkzeughälfte gelegt,
- die erste Kunststoffplatte wird mittels Unterdruck oder Druck an die erste Werkzeughälfte gesaugt oder gepresst,
- hierdurch wird der Kunststoff der ersten Kunststoffplatte bereichsweise hinter einer Hinterschneidung eines Einlegeteils, nämlich des Bossteils, seitlich beabstandet vom Einlegeteil angeordnet, oder das Einlegeteil wird, nach dem Saugen oder Pressen der ersten Kunststoffplatte an die erste Werkzeughälfte, so positioniert, dass Kunststoff der ersten Kunststoffplatte bereichsweise hinter einer Hinterschneidung des Einlegeteils seitlich beabstandet vom Einlegeteil angeordnet ist,
- danach wird mittels eines Schiebers oder eines Unterdrucks oder eines Drucks der Kunststoff der ersten Kunststoffplatte hinter der Hinterschneidung von seitlich beabstandet des Einlegeteils an das Einlegeteil gedrückt oder gesaugt, so dass ein Raum hinter der Hinterschneidung des Einlegeteils mit dem Kunststoff gefüllt wird.

Bevorzugt wird somit das Bossteil als Einlegeteil in das Werkzeug eingelegt und in einem Blas- oder Tiefziehvorgang mit der Kunststoffplatte, insbesondere einem permeationsdichten Mehrschichtverbund, umschlossen, sodass der Kunststoff auch in Bereiche hinter einer Hinterschneidung gelangt. Dazu wird zunächst eine Kunststoffplatte mittels Unterdruck oder Druck an die erste Werkzeughälfte gesaugt oder gepresst. Dabei kann das Einlegeteil bereits so positioniert sein, dass durch das Saugen oder Pressen des Kunststoffs an die erste Werkzeughälfte der Kunststoff der ersten Kunststoffplatte bereichsweise hinter einer Hinterschneidung des Einlegeteils, seitlich beabstandet vom Einlegeteil, angeordnet wird.

Alternativ kann erst nach dem Saugen oder Pressen des Kunststoffs an die erste Werkzeughälfte das Einlegeteil so positioniert werden, dass Kunststoff der ersten Kunststoffplatte hinter der Hinterschneidung seitlich beabstandet vom Einlegeteil angeordnet wird, beispielsweise in dem das Einlegeteil verschoben wird oder das Einlegeteil erst jetzt in die erste Werkzeughälfte eingebracht wird.

Danach wird mittels eines Schiebers oder eines Unterdrucks oder eines Drucks der Kunststoff der ersten Kunststoffplatte von seitlich des Einlegeteils an das Einlegeteil heran gedrückt oder gesaugt, so dass ein Raum hinter der Hinterschneidung des Einlegeteils mit dem zuvor seitlich befindlichen Kunststoff gefüllt wird und ein Formschluss entsteht.

Dadurch gelangt der Kunststoff, trotz einfacher Herstellung mittels Blasformen bzw. Vakuumformen, auch in Bereiche hinter dem Einlegeteil und es ergibt sich eine verbesserte dichtende Wirkung des Kunststoffes, insbesondere Mehrschichtverbundes, zum Einlegeteil, insbesondere zum metallischen Bossteil, hin. Um den Einschluss in den Kunststoff zu erreichen werden Schieber und/oder ein Vakuum bzw. Druckluft verwendet.

"Seitlich beabstandet" bedeutet dabei im Wesentlichen beabstandet von einer Längsmittelachse des Einlegeteils, die bevorzugt auch mit der Längsmittelachse des Druckbehälters zusammen fallen kann. Der Kunststoff kann zunächst im Wesentlichen parallel zur Längsmittelachse des Einlegeteils und bevorzugt auch zur umgebenden Behälterwand verlaufen. Der Kunststoff wird dann im Wesentlichen normal auf die Längsmittelachse des Einlegeteils, insbesondere allseitig radial nach innen, zum Einlegeteil hin, gesaugt, geblasen oder geschoben.

Dass das Saugen oder Drücken des Kunststoffs an das Einlegeteil heran zeitlich nach dem Positionieren des Einlegeteils, so dass der Kunststoff bereichsweise seitlich beabstandet vom Einlegeteil angeordnet ist, erfolgt, kann auch in einem kontinuierlichen Prozess erfolgen, so dass jeweils das Einlegeteil weiter bewegt und positioniert wird und dabei jeweils weiter neu Kunststoff herangesaugt oder gedrückt wird, so dass die Positionierung des Einlegeteils und das Heransaugen oder Drücken des Kunststoffs hinter die Hinterschneidung quasi gleichzeitig erfolgt.

Die Hülse wird in den Innenumfang des Fußteils des Einlegeteils eingepresst, wobei im Bereich des Einpressens eine dünne Kunststoffschicht zwischen Hülse und Innenumfang des Fußteils entsteht.

Die so entstehende Halbschale kann in einem weiteren Prozessschritt mit einer zweiten Halbschale oder einem extrudierten oder blasgeformten Mehrschichtzylinder verbunden werden. Dies bildet den Kern und somit die Basis für einen weiteren Wickelprozess, in dem der Behälter seine mechanische Festigkeit durch einen Verbundwerkstoff aus Kohle und/oder Glas und Epoxidharz erhalten kann.

Vorzugsweise umfasst das Werkzeug eine zweite Werkzeughälfte, die einen Stempel bildet, wobei die zweite Werkzeughälfte auf die erste Werkzeughälfte gefahren wird um die innere Kontur der Halbschale auszubilden. Die zweite Werkzeughälfte kann dazu die Form der ersten Kunststoffplatte im Inneren der Halbschale ausformen. Die zweite Werkzeughälfte kann stattdessen auch mit einer zweiten Kunststoffplatte bestückt sein, die die innere Kontur der Halbschale ausbildet.

Vorzugsweise wird das Einlegeteil, nach dem Saugen oder Pressen der ersten Kunststoffplatte an die erste Werkzeughälfte, in Relation zur ersten Werkzeughälfte angehoben, um das Einlegeteil so zu positionieren, dass Kunststoff der ersten Kunststoffplatte hinter der Hinterschneidung seitlich beabstandet vom Einlegeteil angeordnet wird. Das Anheben kann mit Hilfe einer beweglichen Aufnahme für das Einlegeteil erfolgen. Das Einlegeteil kann dabei behälteraußenseitig an der ersten Kunststoffplatte angeordnet sein und das Anheben kann somit entlang der Längsmittelachse des Einlegeteils und bevorzugt auch entlang der Längsmittelachse des Hochdruckbehälters erfolgen, insbesondere in Richtung zum späteren Zentrum des Behälters hin.

Bevorzugt wird das Einlegeteil nach dem Füllen des Raums hinter der Hinterschneidung des Einlegeteils mit dem Kunststoff wieder abgesenkt, in Relation zur ersten Werkzeughälfte. Besonders bevorzugt erfolgt das Absenken gleichzeitig mit dem Verfahren der zweiten Werkzeughälfte auf die erste Werkzeughälfte.

Gemäß einer anderen Ausführungsform wird das Einlegeteil erst nach dem Saugen oder Pressen der ersten Kunststoffplatte an die erste Werkzeughälfte auf die erste Kunststoffplatte gelegt, um das Einlegeteil so zu positionieren, dass Kunststoff der ersten Kunststoffplatte hinter der Hinterschneidung seitlich beabstandet vom Einlegeteil angeordnet wird. Das Einlegeteil kann somit behälterinnenseitig an der ersten Kunststoffplatte angeordnet sein. Eine zweite Kunststoffplatte kann wiederum behälterinnenseitig des Einlegeteils angeordnet werden.

Der Kunststoff der ersten Kunststoffplatte kann axial hinter dem mit Kunststoff gefüllten Raum hinter der Hinterschneidung, abgeschnitten werden, so dass hinter der Hinterschneidung, insbesondere behälteraußenseitig der Hinterschneidung, kein Kunststoff mehr vorliegt.

Bevorzugt wird eine vorgeheizte zweite Kunststoffplatte auf die zweite Werkzeughälfte gelegt, danach die zweite Kunststoffplatte mittels Unterdruck oder Druck an die zweite Werkzeughälfte gesaugt oder gepresst, und die zweite Werkzeughälfte mit der zweiten Kunststoffplatte auf die erste Werkzeughälfte gefahren, um die innere Kontur der Halbschale auszubilden.

Bevorzugt ist die erste Kunststoffplatte ein Mehrschichtverbund, wobei der Mehrschichtverbund bevorzugt eine Schicht aus HDPE (High Density Polyethylen) und eine Barriereschicht, insbesondere EVOH (EthylenVinylalkohol-Copolymer), umfasst. Besonders bevorzugt umfasst der Mehrschichtverbund auch ein Regrindmaterial bzw. Regranulat und/oder ein oder mehrere Haftvermittlerschichten. HDPE bildet bevorzugt die äußerste Schicht des Mehrschichtverbundes und kann zusätzlich auch die innerste Schicht bilden.

Ein Verfahren zur Herstellung eines Hochdruckbehälters umfasst bevorzugt, dass eine Halbschale hergestellt wird durch ein Verfahren wie zuvor beschrieben, wobei die Halbschale mit einer weiteren Halbschale - die beispielsweise ebenfalls ein Einlegeteil umfassen kann und die auf die selbe zuvor beschriebene Art hergestellt sein kann - oder mit mindestens einem - bevorzugt extrudierten oder blasgeformten - Zylinder und einer Endkappe verbunden wird, um einen geschlossenen Behälter zu bilden.

Der geschlossene Behälter wird vorzugsweise mit einem Fasermaterial umwickelt, bevorzugt mit einem Verbundwerkstoff umfassend Kohlefasern und/oder Glasfasern und/oder Epoxidharz.

### Kurzbeschreibung der Zeichnungen

Die Erfindung wird im Folgenden beispielhaft unter Bezugnahme auf die Zeichnungen beschrieben.
- Fig. 1 - Fig. 6: sind Schnittansichten die Schritte eines Verfahrens zur Herstellung einer Halbschale für einen erfindungsgemäßen Hochdruckbehälter in einer ersten Ausführungsform zeigen.

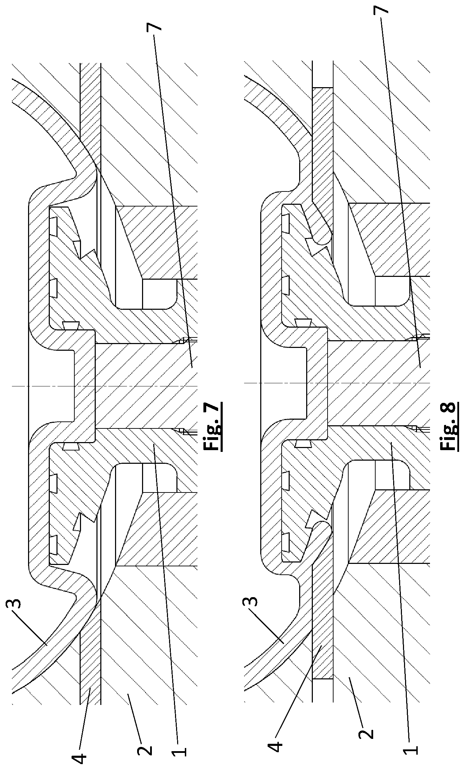

- Fig. 7: ist eine Detaildarstellung der Fig. 3 im Bereich um die Hinterschneidung des Einlegeteils 1.
- Fig. 8: ist eine Detaildarstellung der Fig. 4 im Bereich um die Hinterschneidung des Einlegeteils 1.
- Fig. 9 - Fig. 14: sind Schnittansichten die Schritte eines Verfahrens zur Herstellung einer Halbschale für einen erfindungsgemäßen Hochdruckbehälter in einer zweiten Ausführungsform zeigen.
- Fig. 15: ist eine Schnittansicht eines erfindungsgemäßen Hochdruckbehälters.
- Fig. 16: ist eine Schnittansicht einer Halbschale eines erfindungsgemäßen Hochdruckbehälters.
- Fig. 17: ist eine Schnittansicht einer weiteren Halbschale eines erfindungsgemäßen Hochdruckbehälters mit eingesetzter Hülse.
- Fig. 18: ist eine Schnittansicht einer weiteren Halbschale eines erfindungsgemäßen Hochdruckbehälters mit eingesetztem Ventil.
- Fig. 19: ist eine Schnittansicht des Details A der Halbschale gemäß Fig. 18.
- Fig. 20: ist eine Schnittansicht des Details A, entsprechend Fig. 19, jedoch ohne Ventil und Dichtelement, mit potentiellem Leckagepfad.
- Fig. 21: ist eine Schnittansicht einer weiteren Halbschale eines erfindungsgemäßen Hochdruckbehälters.
- Fig. 22: ist eine Schnittansicht des Details B der Halbschale gemäß Fig. 21.

### Detaillierte Beschreibung der Erfindung

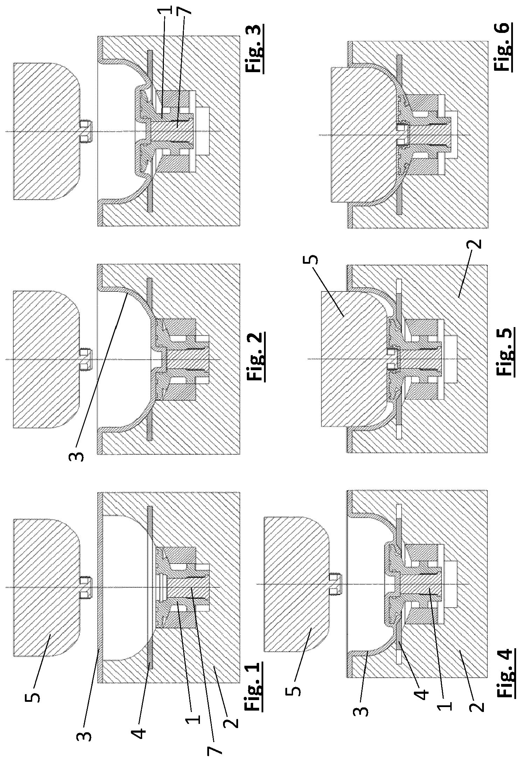

In den Fig. 1-6 ist ein mögliches Verfahren zur Herstellung einer Halbschale für einen erfindungsgemäßen Hochdruckbehälter dargestellt.

Es wird ein Werkzeug verwendet mit einer ersten Werkzeughälfte 2, die eine Matrize bildet, und mit einer zweiten Werkzeughälfte 5, die einen Stempel bildet.

Das Werkzeug besteht somit aus zwei Werkzeughälften wobei in der ersten Werkzeughälfte 2, bevorzugt der unteren Werkzeughälfte, das Einlegeteil auf einer beweglichen Aufnahme 7 positioniert wird. Die zweite Werkzeughälfte 5, bevorzugt die obere Werkzeughälfte, fungiert als Stempel, um am Ende des Prozesses eine Verpressung aufzubringen. Zusätzlich kann die zweite Werkzeughälfte 5 auch mit einem zweiten Einlegeteil bestückt werden. Mit Hilfe von im Werkzeug vorgesehenen Schiebern 4 und/oder Vakuum wird der Kunststoff an die für den Formschluss notwendigen Stellen gebracht.

Dazu wird eine vorgeheizte erste Kunststoffplatte 3 auf die erste Werkzeughälfte 2 gelegt und die erste Kunststoffplatte 3 mittels Unterdruck oder Druck an die erste Werkzeughälfte 2 gesaugt oder gepresst. Danach wird das Einlegeteil 1, also das Bossteil, so positioniert, dass Kunststoff der ersten Kunststoffplatte 3 bereichsweise hinter einer Hinterschneidung, seitlich beabstandet vom Einlegeteil 1, angeordnet ist. Alternativ kann auf das Verfahren des Einlegeteils 1 auch verzichtet werden, so dass der Kunststoff gleich auf ein richtig positioniertes Einlegeteil 1, entsprechend Fig. 3, gesaugt wird.

Dann wird mittels eines Schiebers 4 oder eines Unterdrucks oder eines Drucks der Kunststoff der ersten Kunststoffplatte 3 hinter der Hinterschneidung von seitlich beabstandet des Einlegeteils 1 an das Einlegeteil 1 gedrückt oder gesaugt, so dass ein Raum hinter der Hinterschneidung des Einlegeteils 1 mit dem Kunststoff gefüllt wird.

Schließlich wird die zweiten Werkzeughälfte 5 auf die erste Werkzeughälfte 2 gefahren, um die innere Kontur der Halbschale auszubilden.

Das in den Fig. 1 bis 6 dargestellt Singlesheet-Verfahren zeigt im Einzelnen folgende Schritte:
Im ersten Schritt des Singlesheet-Verfahrens (Fig. 1) wird die eine Werkzeughälfte, nämlich die erste Werkzeughälfte 2, mit dem Einlegeteil 1 - nämlich einem Bossteil - und einer vorgeheizten Kunststoffplatte 3 bestückt. Das Einlegeteil 1 befindet sich in der Ausgangsposition.

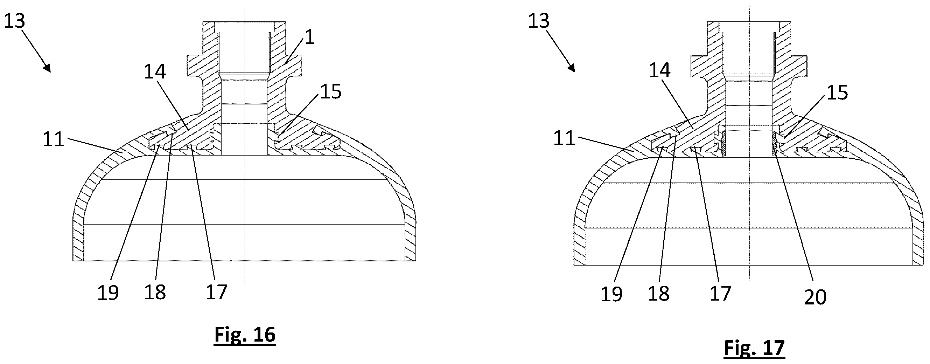

Optional kann an dieser Stelle auch die zweite Werkzeughälfte 5 mit einem weiteren Einlegteil bestückt werden, insbesondere mit der Hülse 20 die später (Fig. 17 bis Fig. 21) besprochen wird.

Die Kunststoffplatte 3 wird mit Hilfe von Vakuum in die erste Werkzeughälfte 2, welche die äußere Bauteilgeometrie abbildet, eingesaugt.

Um den für den Formschluss notwendigen Raum hinter der Hinterschneidung des Einlegteiles 1 mit Kunststoff zu füllen, ist das Einlegteil 1 in der ersten Werkzeughälfte 2 auf einer beweglichen Aufnahme 7 positioniert. Durch Anheben des Bauteils und den beispielsweise gleichzeitigen Einsatz von Vakuum und/oder Schiebern 4 wird der Raum hinter der Hinterschneidung des Bauteiles gefüllt - Fig. 3 und Fig. 4.

Im nächsten Schritt (Fig. 5) wird die zweite Werkzeughälfte 5 mit einer definierten Schließkraft auf die erste Werkzeughälfte 2 abgesenkt und die innere Kontur des Bauteiles abgebildet. Im Zuge dieses Prozessschrittes kann das Einlegeteil 1 gegebenenfalls wieder in die Ausgangsposition gebracht werden. Dadurch wird der Kunststoff hinter den Hinterschneidungen zusätzlich verpresst und der Formschluss zwischen Einlegeteil 1 und Kunststoff der ersten Kunststoffplatte 3 erhöht.

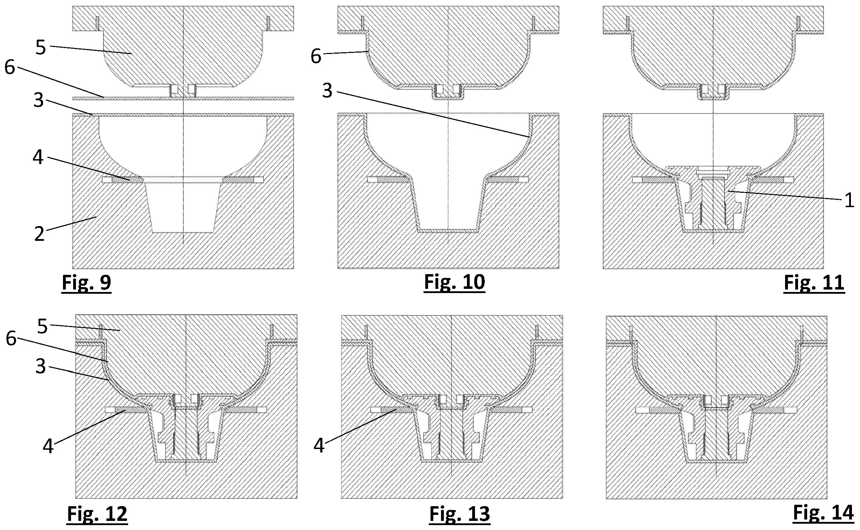

Eine alternative Ausführung des Herstellungsverfahrens zeigen die Fig. 9 bis Fig. 14, nämlich ein Twinsheet-Verfahren zur Herstellung der Halbschale.

Im ersten Schritt des Twinsheet-Verfahrens werden beide Werkzeughälften 2, 5 mit jeweils einer vorgeheizten Kunststoffplatte 3, 6 bestückt (Fig. 9). Optional kann an dieser Stelle auch die zweite Werkzeughälfte 5 mit einem Einlegeteil bestückt werden. Die Kunststoffplatten 3, 6 werden mit Hilfe von Vakuum in bzw. an die jeweiligen Werkzeughälften 2, 5 gesaugt, welche die äußere bzw. innere Bauteilgeometrie abbilden (Fig. 10).

Im nächsten Schritt wird in die erste Werkzeughälfte 2 das zu umschließende Einlegeteil 1 eingelegt (Fig. 11).

Mit Hilfe von Vakuum und/oder Schiebern 4 wird der Raum hinter der für den Formschluss notwendigen Hinterschneidung des Einlegeteiles 1 mit Kunststoff gefüllt (Fig. 12). Das überschüssige Material wird durch in das Werkzeug eingebrachten Schneidkanten hinter der Hinterschneidung abgetrennt (Fig. 13). Diese Schneiden können, wie in Fig. 13, auch in den Schiebern 4 enthalten sein. Fig. 14 zeigt das fertig geformte Bauteil, wobei der überschüssige Kunststoff, unterhalb der Hinterschneidung und der Schieber 4, abgetrennt ist. Eine Hülse 20 kann auch später in das Bossteil und/oder in den Kunststoff innerhalb des Bossteils eingebracht, insbesondere eingepresst, werden.

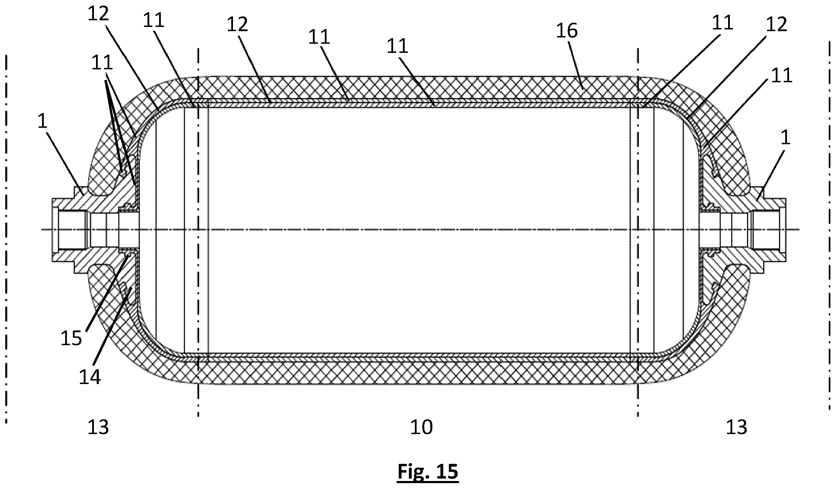

Ein erfindungsgemäßer Hochdruckbehälter ist in Fig. 15 dargestellt. Der Hochdruckbehälter umfasst einen Zylinder 10 als Mittelteil, wobei der Zylinder 10 aus einem Mehrschichtverbund-Kunststoff 11 besteht der eine Barriereschicht 12 umfasst, wobei der Hochdruckbehälter ferner zumindest eine Halbschale 13 an einem axialen Ende des Zylinders 10 umfasst, wobei die Halbschale 13 aus einem Mehrschichtverbund-Kunststoff 11 besteht, der eine Barriereschicht 12 umfasst, wobei die Halbschale 13 ferner ein im wesentlichen rotationssymmetrisches Einlegeteil 1, nämlich ein Bossteil, umfasst, wobei das Einlegeteil 1 eine Hinterschneidung in Bezug auf eine Entformung in Richtung der Längsmittelachse des Einlegeteils 1 umfasst, wobei der Mehrschichtverbund-Kunststoff 11 der Halbschale 13 axial an beiden Seiten der Hinterschneidung des Einlegeteils 1 angeordnet ist.

Die Hinterschneidung wird durch ein Fußteil 14 an dem, dem Behälterinneren zugewandten Ende des Einlegeteils 1, gebildet, welches einen größeren Durchmesser aufweist als ein Mittelteil des Einlegeteils 1. Der Mehrschichtverbund-Kunststoff 11 ist axial an beiden Seiten des Fußteils 14 angeordnet.

Das Fußteil 14 weist mehrere Nuten 15 auf, die mit dem Mehrschichtverbund-Kunststoff 11 der Halbschale 13 gefüllt sind.

Das Einlegeteil 1 weist im Wesentlichen die Form eines Hohlzylinders auf. Das Fußteil 14 weist im Wesentlichen die Form eines Hohlkegels auf.

Eine mit dem Mehrschichtverbund-Kunststoff 11 der Halbschale 13 gefüllte Nut 15 läuft an einem Innenumfang des Fußteils 14 um.

Der Mehrschichtverbund-Kunststoff 11 des Zylinders 10 geht in den Mehrschichtverbund-Kunststoff 11 der Halbschale 13 über.

Der Mehrschichtverbund-Kunststoff 11 der Halbschale 13 sowie auch des Zylinders 10 umfasst eine Schicht aus HDPE als äußerste Schicht und eine Barriereschicht 12 aus EVOH. Das HDPE kann als HDPE-S (Schwarz) vorliegen, danach kann eine Regranulatschicht angeordnet sein, ein Haftvermittler, die EVOH Schicht, optional wieder ein Haftvermittler und optional auch als innerste Schicht wieder eine HDPE Schicht.

Der Hochdruckbehälter umfasst zwei Halbschalen 13 an den axialen Enden des Zylinders 10, wobei beide Halbschalen 13 so ausgebildet sind, wie zuvor beschrieben, also ein Bossteil 1 aufweisen, dass in den Mehrschichtverbund-Kunststoff 11 eingebettet ist.

Der Zylinder 10 und die beiden Halbschalen 13 sind mit einem Fasermaterial 16 umwickelt, bevorzugt mit einem Verbundwerkstoff umfassend Kohlefasern und/oder Glasfasern und/oder Epoxidharz.

Insgesamt wird somit ein Hochddruckbehälter angegeben, der der Speicherung von Gasen unter hohem Druck dienen kann. Dieser ist in Leichtbauweise ausgeführt und besitzt einen mehrteiligen Mehrschicht-Kunststoffliner, bestehend aus zwei Domkappen 13 und einem Zylinder 10, welcher die Gasdichtheit sicherstellt und eine Permeationsbarriere 12 enthält.

In den beiden Domkappen 13 sind Einlegeteile 1, nämlich Bossteile, genauer ein "Headstock" und ein "Tailstock" integriert.

Die Permeationseigenschaften liefert sowohl in den Domkappen 13 als auch im Zylinderrohr 10 eine im Schichtaufbau des Liners enthaltene Sperrschicht bzw. Barriereschicht 12.

Der Hochdruckbehälter bekommt seine mechanische Festigkeit durch einen faserverstärkten Verbund 16, welcher im Wickelprozess auf den Kunststoffliner aufgebracht und anschließend ausgehärtet wird.

Fig. 16 zeigt eine Halbschale 13 eines erfindungsgemäßen Hochdruckbehälters vor dem Einbringen der Hülse 20. Die Halbschale 13 besteht aus einem Mehrschichtverbund-Kunststoff 11, der eine Barriereschicht 12 umfasst, wobei die Halbschale 13 ferner ein im wesentlichen rotationssymmetrisches Einlegeteil 1, nämlich ein Bossteil, umfasst. Das Einlegeteil 1 weist ein Fußteil 14 an dem, dem Behälterinneren zugewandten Ende des Einlegeteils 1 auf, welches einen größeren Durchmesser aufweist als ein Mittelteil des Einlegeteils 1. Das Fußteil 14 bildet im Wesentlichen einen Hohlkegel. Eine mit dem Mehrschichtverbund-Kunststoff 11 der Halbschale 13 gefüllte erste Nut 15 umläuft des Innenumfang des Fußteils 14.

Der Mehrschichtverbund-Kunststoff 11 der Halbschale 13 ist axial an beiden Seiten des Fußteils 14 angeordnet.

Das Fußteil 14 weist eine zweite Nut 17 auf, die mit dem Mehrschichtverbund-Kunststoff 11 der Halbschale 13 gefüllt ist, wobei die zweite Nut 17 in der Nähe des Innenumfangs des Fußteils 14 an dem, dem Behälterinneren zugewandten, Boden des Fußteils 14 umläuft.

Das Fußteil 14 weist eine dritte Nut 18 auf, die mit dem Mehrschichtverbund-Kunststoff 11 der Halbschale 13 gefüllt ist, wobei die dritte Nut 18 an der, der Außenseite des Behälters zugewandten, Deckfläche des Fußteils 14 umläuft.

Das Fußteil 14 weist eine vierte Nut 19 auf, die mit dem Mehrschichtverbund-Kunststoff 11 der Halbschale 13 gefüllt ist, wobei die vierte Nut 19 in der Nähe des Außenumfangs des Fußteils 14 an dem, dem Behälterinneren zugewandten, Boden des Fußteils 14 umläuft.

Wie in Fig. 17 dargestellt, ist - nach Fertigstellung der Halbschale - radial innerhalb der ersten Nut 15, innerhalb des Innenumfangs des Fußteils 14, eine Hülse 20 angeordnet, wobei der Mehrschichtverbund-Kunststoff 11 der Halbschale 13 durch die Hülse 20 gegen den Innenumfang des Fußteils 14 und in die erste Nut 15 gedrückt wird.

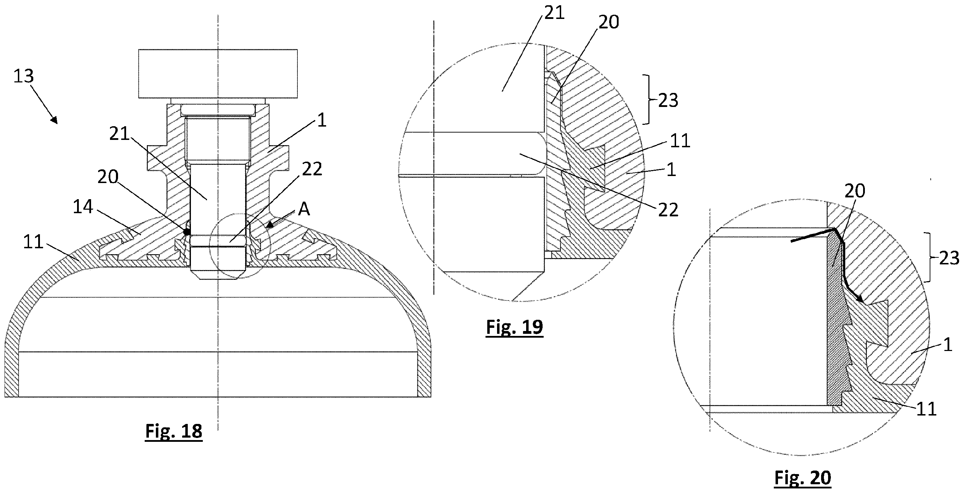

In Fig. 18 ist eine erfindungsgemäße Halbschale mit einem eingebrachten, dicht sitzenden Ventil 21 darstellt.

Eine Hülse 20 ist in den Innenumfangs des Fußteils 14 eingepresst, wobei der Kunststoff 11 der Halbschale 13 zwischen der Hülse 20 und dem Innenumfang des Fußteils 14 angeordnet ist. Der Hochdruckbehälter umfasst ein Ventil 21, das in den Bossteil aufgenommen ist, wobei ein Schaftabschnitt des Ventils 21 in der Hülse 20 aufgenommen ist. Ein Dichtelement 22, nämlich eine Ringdichtung dichtet zwischen dem Schaftabschnitt des Ventils 21 und der Hülse 20 ab.

Fig. 19 stellt das Detail A der Fig. 18 genauer dar.

Die Hülse 20 ist in den Innenumfang des Fußteils 14, axial in einem Verpressungsabschnitt 23 der Hülse 20, eingepresst, wobei im Bereich des Einpressens, also im Verpressungsabschnitt 23, eine dünne Kunststoffschicht des Kunststoffs 11 zwischen Hülse 20 und Innenumfang des Fußteils 14 verbleibt, also eingepresst ist.

Der Kunststoff 11 der Halbschale 13 füllt den gesamten Raum zwischen der Hülse 20 und dem Innenumfang des Fußteils 14 aus.

Durch die Wirkung des Dichtelements 22 zwischen Ventil 21 und Hülse 20, muss lediglich die Dichtheit im Bereich des Kunststoffs 11 außerhalb der Hülse 20 sichergestellt werden.

Durch die dünne Kunststoffschicht zwischen Hülse 20 und Innenumfang des Einlegeteils 1, nach dem Einpressen der Hülse 20, besteht eine hohe Dichtheit im Bereich der dünnen Kunststoffschicht und somit im Bereich des Leckagepfads, der in Fig. 20 als Pfeil eingezeichnet ist. Durch die geringe Dicke des Kunststofffilms ist die Wärmeausdehnung im Betrieb, sowie der Schrumpf während des Herstellungsprozesses, in diesem Bereich vernachlässigbar klein und eine gute Abdichtung gewährleistet.

Der Behälter kann, wie in Fig. 20 dargestellt, auch ohne Dichtelement bzw. Ringdichtung im Bereich der Hülse 20 verwendet werden. Ein Dichtelement, insbesondere eine Ringdichtung, kann insbesondere oberhalb, also ausgangsseitig, der Hülse 20, zwischen einem Ventil und dem Einlegeteil 1 angeordnet sein.

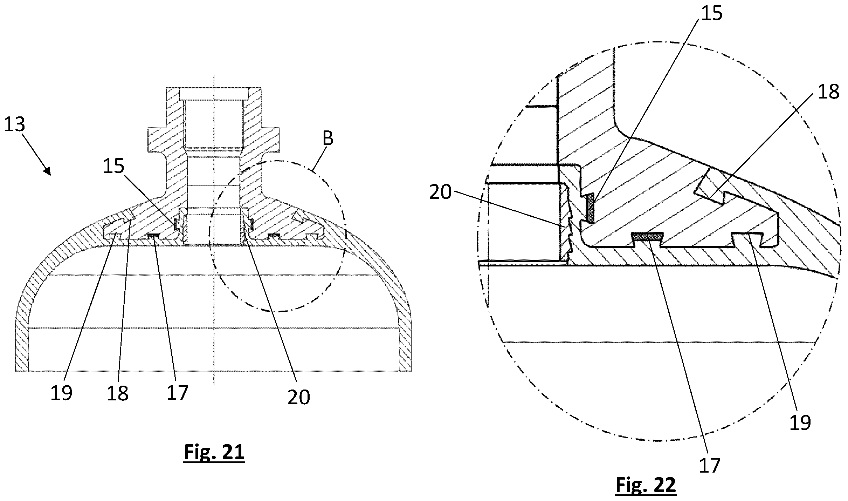

Wie in der Fig. 21 und deren Detailausschnitt des Details B in Fig. 22 zu sehen, kann am Boden der Nuten, insbesondere der ersten Nut 15 und der zweiten Nut 17, ein Dichtelement angeordnet sein.

Die primäre Dichtwirkung erfolgt über die Verpressung des Kunststoffes in den ringumlaufende Nuten 15 und 17 am Metallunterteil bzw. in der Kernlochbohrung des Fußteils des Bossteils 1. Zwei weitere Nuten 18, 19 an der Telleraußenseite bzw. Telleroberfläche dienen vor allem dem Formschluss und der Stabilisierung der Kunststoff-Metall-Verbindung.

Durch die im Zuge des Fertigungsprozesses in die Kernlochbohrung eingeschobene Hülse 20, wird die Verpressung auf das dichtende Kunstoffmaterial in der ersten Nut 15 erhöht.

In einer Option werden die eine oder beide Dichtungsnuten 15, 17 - wie in Fig. 19 dargestellt - mit einem zusätzlichem Dichtelement versehen, um die Dichtwirkung in diesem Bereich zu erhöhen.

### Bezugszeichenliste

- 1: Einlegeteil, Bossteil
- 2: erste Werkzeughälfte
- 3: erste Kunststoffplatte
- 4: Schieber
- 5: zweite Werkzeughälfte
- 6: zweite Kunststoffplatte
- 7: Aufnahme
- 10: Zylinder
- 11: Mehrschichtverbund-Kunststoff
- 12: Barriereschicht
- 13: Halbschale
- 14: Fußteil
- 15: erste Nut
- 16: Fasermaterial
- 17: zweite Nut
- 18: dritte Nut
- 19: vierte Nut
- 20: Hülse
- 21: Ventil
- 22: Dichtelement
- 23: Verpressungsabschnitt

## Patentansprüche

1. Hochdruckbehälter umfassend einen Zylinder (10) als Mittelteil, wobei der Zylinder (10) aus einem Kunststoff (11) besteht, wobei der Hochdruckbehälter ferner zumindest eine Halbschale (13) an einem axialen Ende des Zylinders (10) umfasst, wobei die Halbschale (13) aus dem Kunststoff (11) besteht, wobei die Halbschale (13) ferner ein im wesentlichen rotationssymmetrisches Einlegeteil (1), nämlich ein Bossteil, umfasst, wobei das Einlegeteil (1) ein Fußteil (14) an dem, dem Behälterinneren zugewandten Ende des Einlegeteils (1) aufweist, wobei das Fußteil (14) des Einlegeteils (1) in den Kunststoff (11) der Halbschale (13) eingebettet ist, wobei das Fußteil (14) im Wesentlichen einen Hohlkegel oder Hohlzylinder bildet, **dadurch gekennzeichnet, dass** eine Hülse (20) in den Innenumfang des Fußteils (14) zumindest in einem Verpressungsabschnitt (23) der Hülse (20) eingepresst ist, wobei der Kunststoff (11) der Halbschale (13) zwischen der Hülse (20) und dem Innenumfang des Fußteils (14) angeordnet ist, sodass im Verpressungsabschnitt (23) eine dünne Kunststoffschicht des Kunststoffs (11) der Halbschale (13) zwischen Hülse (20) und Innenumfang des Fußteils (14) verpresst ist, wobei der Hochdruckbehälter ein Ventil (21) umfasst, das in den Bossteil aufgenommen ist, wobei ein Schaftabschnitt des Ventils (21) in der Hülse (20) aufgenommen ist, wobei ein Dichtelement (22), insbesondere eine Ringdichtung, zwischen dem Schaftabschnitt des Ventils (21) und der Hülse (20) abdichtet.

2. Hochdruckbehälter nach Anspruch 1,
**dadurch gekennzeichnet, dass** die dünne Kunststoffschicht des Kunststoffs (11) der Halbschale (13), die zwischen Hülse (20) und Innenumfang des Fußteils (14) verpresst ist, sich über den gesamten Verpressungsabschnitt erstreckt.

3. Hochdruckbehälter nach zumindest einem der vorhergehenden Ansprüche,
**dadurch gekennzeichnet, dass** der Kunststoff (11) der Halbschale (13) den gesamten Raum zwischen der Hülse (20) und dem Innenumfang des Fußteils (14) ausfüllt.

4. Hochdruckbehälter nach zumindest einem der vorhergehenden Ansprüche,
**dadurch gekennzeichnet, dass** der Kunststoff (11) ein Mehrschichtverbund-Kunststoff ist, der eine Barriereschicht (12) umfasst.

5. Hochdruckbehälter nach zumindest einem der vorhergehenden Ansprüche,
**dadurch gekennzeichnet, dass** eine mit dem Mehrschichtverbund-Kunststoff (11) der Halbschale (13) gefüllte erste Nut (15) oder Vertiefung an dem Innenumfang des Fußteils (14) auf Höhe der Hülse (20) zumindest abschnittsweise umläuft, bevorzugt außerhalb des Verpressungsabschnitts.

6. Hochdruckbehälter nach zumindest einem der vorhergehenden Ansprüche,
**dadurch gekennzeichnet, dass** der Mehrschichtverbund-Kunststoff (11) der Halbschale (13) axial an beiden Seiten des Fußteils (14) angeordnet ist.

7. Hochdruckbehälter nach zumindest einem der vorhergehenden Ansprüche,
**dadurch gekennzeichnet, dass** das Fußteil (14) zumindest eine zweite Nut (17) aufweist, die mit dem Mehrschichtverbund-Kunststoff (11) der Halbschale (13) gefüllt ist, wobei die zweite Nut (17) in der Nähe des Innenumfangs des Fußteils (14) an dem, dem Behälterinneren zugewandten, Boden des Fußteils (14) zumindest abschnittsweise umläuft.

8. Hochdruckbehälter nach zumindest einem der vorhergehenden Ansprüche,
**dadurch gekennzeichnet, dass** das Fußteil (14) zumindest eine dritte Nut (18) aufweist, die mit dem Mehrschichtverbund-Kunststoff (11) der Halbschale (13) gefüllt ist, wobei die dritte Nut (18) an der, der Außenseite des Behälters zugewandten, Deckfläche des Fußteils (14) zumindest abschnittsweise umläuft.

9. Hochdruckbehälter nach zumindest einem der vorhergehenden Ansprüche,
**dadurch gekennzeichnet, dass** das Fußteil (14) zumindest eine vierte Nut (19) aufweist, die mit dem Mehrschichtverbund-Kunststoff (11) der Halbschale (13) gefüllt ist, wobei die vierte Nut (19) in der Nähe des Außenumfangs des Fußteils (14) an dem, dem Behälterinneren zugewandten, Boden des Fußteils (14) zumindest abschnittsweise umläuft.

10. Hochdruckbehälter nach zumindest einem der vorhergehenden Ansprüche,
**dadurch gekennzeichnet, dass** der Zylinder (10) und die beiden Halbschalen (13) mit einem Fasermaterial (16) umwickelt sind, bevorzugt mit einem Verbundwerkstoff umfassend Kohlefasern und/oder Glasfasern und/oder Epoxidharz.

11. Hochdruckbehälter nach zumindest einem der vorhergehenden Ansprüche,
**dadurch gekennzeichnet, dass** ein Dichtelement, insbesondere eine Ringdichtung, zwischen dem Schaftabschnitt des Ventils (21) und dem Bossteil abdichtet.

## Claims

1. High-pressure container comprising a cylinder (10) as a centre part, wherein the cylinder (10) is made of a plastic (11), wherein the high-pressure container furthermore comprises at least one half-shell (13) at an axial end of the cylinder (10), wherein the half-shell (13) is made of the plastic (11), wherein the half-shell (13) furthermore comprises a substantially rotationally symmetrical insert part (1), namely a boss part, wherein the insert part (1) has a foot part (14) at the end of the insert part (1) facing the container interior, wherein the foot part (14) of the insert part (1) is embedded in the plastic (11) of the half-shell (13), wherein the foot part (14) substantially forms a hollow cone or hollow cylinder, **characterized in that** a sleeve (20) is pressed into the inner circumference of the foot part (14) at least in a pressing portion (23) of the sleeve (20), wherein the plastic (11) of the half-shell (13) is arranged between the sleeve (20) and the inner circumference of the foot part (14) so that in the pressing portion (23), a thin plastic layer of the plastic (11) of the half-shell (13) is pressed between the sleeve (20) and the inner circumference of the foot part (14) wherein the high-pressure container comprises a valve (21) which is received in the boss part, wherein a shaft portion of the valve (21) is received in the sleeve (20), wherein a sealing element (22), in particular a ring seal, seals between the shaft portion of the valve (21) and the sleeve (20)

2. High-pressure container according to Claim 1,
**characterized in that** the thin plastic layer of the plastic (11) of the half-shell (13), which is pressed between the sleeve (20) and the inner circumference of the foot part (14), extends over the entire pressing portion.

3. High-pressure container according to at least one of the preceding claims,
**characterized in that** the plastic (11) of the half-shell (13) fills the entire space between the sleeve (20) and the inner circumference of the foot part (14).

4. High-pressure container according to at least one of the preceding claims,
**characterized in that** the plastic (11) is a multilayer composite plastic which comprises a barrier layer (12).

5. High-pressure container according to at least one of the preceding claims,
**characterized in that** a first groove (15) or depression, filled with the multilayer composite plastic (11) of the half-shell (13), runs round at least in portions on the inner circumference of the foot part (14) at the level of the sleeve (20), preferably outside the pressing portion.

6. High-pressure container according to at least one of the preceding claims,
**characterized in that** the multilayer composite plastic (11) of the half-shell (13) is arranged axially on both sides of the foot part (14).

7. High-pressure container according to at least one of the preceding claims,
**characterized in that** the foot part (14) has at least one second groove (17) which is filled with the multilayer composite plastic (11) of the half-shell (13), wherein in the vicinity of the inner circumference of the foot part (14), the second groove (17) runs round at least in portions on the base of the foot part (14) facing the container interior.

8. High-pressure container according to at least one of the preceding claims,
**characterized in that** the foot part (14) has at least one third groove (18) which is filled with the multilayer composite plastic (11) of the half-shell (13), wherein the third groove (18) runs round at least in portions on the cover face of the foot part (14) facing the container exterior.

9. High-pressure container according to at least one of the preceding claims,
**characterized in that** the foot part (14) has at least one fourth groove (19) which is filled with the multilayer composite plastic (11) of the half-shell (13), wherein in the vicinity of the outer circumference of the foot part (14), the fourth groove (19) runs round at least in portions on the base of the foot part (14) facing the container interior.

10. High-pressure container according to at least one of the preceding claims,
**characterized in that** the cylinder (10) and the two half-shells (13) are wrapped with a fibre material (16), preferably a composite material comprising carbon fibres and/or glass fibres and or epoxy resin.

11. High-pressure container according to at least one of the preceding claims,
**characterized in that** , a sealing element, in particular a ring seal, seals between the shaft portion of the valve (21) and the boss part.

## Revendications

1. Réservoir haute pression comprenant un cylindre (10) en tant que partie centrale, le cylindre (10) étant constitué d'une matière synthétique (11), le réservoir haute pression comprenant en outre au moins une demi-coque (13) à une extrémité axiale du cylindre (10), la demi-coque (13) étant constituée de la matière synthétique (11), la demi-coque (13) comprenant en outre une partie d'insertion (1) sensiblement à symétrie de révolution, à savoir une partie à bossage, la partie d'insertion (1) présentant une partie de base (14) à l'extrémité de la partie d'insertion (1) tournée vers l'intérieur du réservoir, la partie de base (14) de la partie d'insertion (1) étant noyée dans la matière synthétique (11) de la demi-coque (13), la partie de base (14) formant sensiblement un cône creux ou un cylindre creux, **caractérisé en ce qu'**une douille (20) est pressée dans la périphérie intérieure de la partie de base (14) au moins dans une partie de pressage (23) de la douille (20), la matière synthétique (11) de la demi-coque (13) étant disposée entre la douille (20) et la périphérie intérieure de la partie de base (14), de sorte qu'une couche mince de la matière synthétique (11) de la demi-coque (13) soit pressée entre la douille (20) et la périphérie intérieure de la partie de base (14) dans la partie de pressage (23), le réservoir haute pression comprenant une soupape (21) qui est reçue dans la partie à bossage, un tronçon de tige de la soupape (21) étant reçu dans la douille (20), un élément d'étanchéité (22), en particulier un joint d'étanchéité annulaire, réalisant l'étanchéité entre le tronçon de tige de la soupape (21) et la douille (20).

2. Réservoir haute pression selon la revendication 1,
**caractérisé en ce que** la couche mince de la matière synthétique (11) de la demi-coque (13) qui est pressée entre la douille (20) et la périphérie intérieure de la partie de base (14) s'étend sur toute la partie de pressage.

3. Réservoir haute pression selon au moins l'une des revendications précédentes,
**caractérisé en ce que** la matière synthétique (11) de la demi-coque (13) remplit tout l'espace entre la douille (20) et la périphérie intérieure de la partie de base (14).

4. Réservoir haute pression selon au moins l'une des revendications précédentes,
**caractérisé en ce que** la matière synthétique (11) est une matière synthétique de composite multicouche qui comprend une couche barrière (12).

5. Réservoir haute pression selon au moins l'une des revendications précédentes,
**caractérisé en ce qu'**une première rainure (15) ou un premier évidement rempli(e) de la matière synthétique de composite multicouche (11) de la demi-coque (13) s'étend sur la périphérie intérieure de la partie de base (14) à hauteur de la douille (20) au moins dans certaines parties, de préférence à l'extérieur de la partie de pressage.

6. Réservoir haute pression selon au moins l'une des revendications précédentes,
**caractérisé en ce que** la matière synthétique de composite multicouche (11) de la demi-coque (13) est disposée axialement sur les deux côtés de la partie de base (14).

7. Réservoir haute pression selon au moins l'une des revendications précédentes,
**caractérisé en ce que** la partie de base (14) présente au moins une deuxième rainure (17) qui est remplie de la matière synthétique de composite multicouche (11) de la demi-coque (13), la deuxième rainure (17) s'étendant, au moins dans certaines parties, à proximité de la périphérie intérieure de la partie de base (14) sur le fond de la partie de base (14) qui est tourné vers l'intérieur du réservoir.

8. Réservoir haute pression selon au moins l'une des revendications précédentes,
**caractérisé en ce que** la partie de base (14) présente au moins une troisième rainure (18) qui est remplie de la matière synthétique de composite multicouche (11) de la demi-coque (13), la troisième rainure (18) s'étendant, au moins dans certaines parties, sur la surface supérieure de la partie de base (14), laquelle surface supérieure est tournée vers le côté extérieur du réservoir.

9. Réservoir haute pression selon au moins l'une des revendications précédentes,
**caractérisé en ce que** la partie de base (14) présente au moins une quatrième rainure (19) qui est remplie de la matière synthétique de composite multicouche (11) de la demi-coque (13), la quatrième rainure (19) s'étendant, au moins dans certaines parties, à proximité de la périphérie extérieure de la partie de base (14) sur le fond de la partie de base (14) qui est tourné vers l'intérieur du réservoir.

10. Réservoir haute pression selon au moins l'une des revendications précédentes,
**caractérisé en ce qu'**un matériau à fibres (16), de préférence comportant une matière composite comprenant des fibres de carbone et/ou des fibres de verre et/ou de la résine époxyde, est enroulé autour du cylindre (10) et des deux demi-coques (13).

11. Réservoir haute pression selon au moins l'une des revendications précédentes,
**caractérisé en ce qu'**un élément d'étanchéité, en particulier un joint d'étanchéité annulaire, réalise l'étanchéité entre le tronçon de tige de la soupape (21) et la partie à bossage.
